# EUROPEAN PATENT APPLICATION

(11) **EP 2 952 425 A1**
(43) Date of publication of application: **09.12.2015**
(21) Application number: 14745847.5
(22) Date of filing: 27.01.2014
(51) Int. Cl.: B63B 25/00

(54) **PROTECTOR FOR TUBULAR SECTIONS DURING STOWAGE**

(30) Priority: 29.01.2013 ES 201330101
(71) Applicant: VASCO GALLEGA DE CONSIGNACIONES, S.L., VIGO (Pontevedra) (ES)
(72) Inventor: CEA VILA, Israel, E-36201 Vigo (Pontevedra) (ES)
(74) Representative: Ungria López, Javier
(86) International application number: PCT/ES2014/070054
(87) International publication number: WO 2014/118412

(57) **Abstract**

Protector for tubular sections (2) of paramagnetic material used during stowage, consisting on an elastic body (1) fitted with a magnet (3). The protector is located on the already stowed tubular sections (2) by means of magnetic adherence, preventing a new tubular section during stowage to strike the already stowed tubular section (2).

## Description

### OBJECT OF THE INVENTION

The present invention refers to a protector that is placed on the lateral surface of tubular sections during their stowage, in order to avoid any contact of the tubular sections with each other, so that they cannot suffer any damage. The tubular sections on which the invention is placed are made of paramagnetic material. The protector incorporates a magnet, so it is magnetically attached to the tubular sections once they have been stowed.

It finds special application in the field of the logistics industry for the transportation of large-sized tubes, more specifically for the transport of tubes sections of wind turbine towers.

### TECHNICAL PROBLEM TO BE SOLVED AND BACKGROUND OF THE INVENTION

Methods in relation to the protection of tubular sections during stowage, are currently known in the art. One of the most extended is the one using a protection known as "lollipop", due to its shape. This protector consists of a pole, topped at one end with an inflatable ball made of elastic material. The dimensions of the "lollipop" depend on the size of the tubular sections to be protected, i.e., a ball of 30-40 cm diameter and a pole between 1.5 and 2.5 meters long.

During the process of the stowage of tubular sections, a worker places one of these "lollipops" between one of the tubular section which has already been stowed and one that is being stowed, in order to avoid damages to the latter. This method, despite being the most extended at present, has the following disadvantages:
- Difficult handling. It is a very slender element that is very awkward to use with wind. It needs to be inflated, but it is difficult to know what the optimum pressure is.
- Safety of the worker is reduced. The area of operation between the two tubular sections, one of which is placed on the ground and the other hanging from above, is the most sensitive concerning safety.
- Performance is decreased. The workers who are holding the "lollipop" cannot be doing any other work. The elimination of this task would let the workers be reallocated to other duties in order to make the operations more efficient.
- Short service life. The inflatable rubber part becomes easily damaged due to the strikes it is exposed to and needs to be replaced, increasing its cost.
- Stowage quality is decreased. Due to the diameter of the head, in order to achieve efficient stowage, with a distance between the sections of approximately 20 cm, these protectors must work under high pressure. This makes it not easy to remove them, and they often break.

Another method used in the protection of goods during stowage is known as "airbag". It is an air cushion that is placed either on the wall or on the free lateral wall of the merchandise that has already been stowed, in such a way that the next load of merchandise can absorb any shocks with the stowed goods. The dimensions of the most common "airbags" are 90 x 180 cm and they withstand the pressure of 0.2 bars, equivalent to about 2 tons of weight. They may be placed directly on the ground or where the stevedore considers appropriate, so there is no need for anyone to hold it. Anyway, the problems related to the fact that the protector is inflated still remain, such as punctures and bursts caused by overpressure during impact, as well as the difficult handling due to its size. Additionally, after their disposal, they generate non-biodegradable waste.

The present invention is meant to solve these problems, which aren't currently solved in the state of the art, introducing an invention which is simple to use and with a very advantageous practical application.

### DESCRIPTION OF THE INVENTION

The invention describes a protector for tubular sections made of paramagnetic material during stowage composed of a body fitted with a magnet. The protectors are placed on the stowed tubular sections, using magnetic adhesion, preventing a new tubular section during the stowage from hitting the tubular section already stowed. The magnet may be placed on the outside of the protector or preferably inside the protector, so that it does not contact directly the tubular sections.

The protector is made of an elastic material, such as high density foamed plastic.

### BRIEF DESCRIPTION OF THE FIGURES

In order to complete the description and to for a better understanding of the features of the invention, according to an example for a preferred embodiment of the invention, a set of drawings of illustrative, and not restrictive nature, is attached, where the following figures have been depictured:

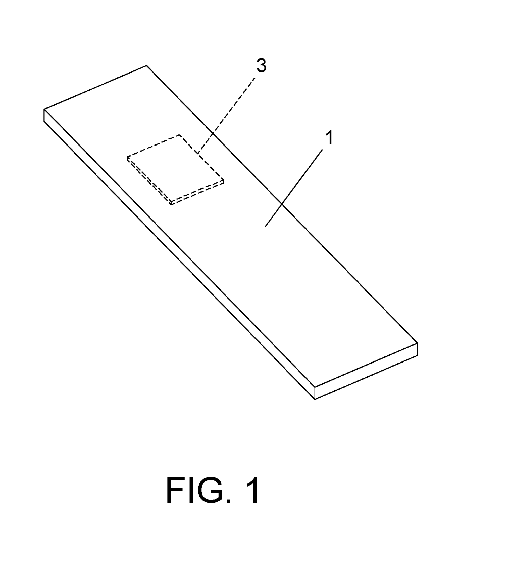

- Figure 1 depicts a perspective view of the protector.
- Figure 2 depicts a perspective view of a tubular section with built-in protectors.

Following there is a list of the references used in the figures:
1. Body.
2. Tubular section.
3. Magnet

### DESCRIPTION OF A PREFERRED EMBODIMENT

The present invention refers to a protector comprising a body (1) fitted with a magnet (3), which is placed on and adhered onto tubular sections (2) made of paramagnetic material, in order to avoid damages during stowing.

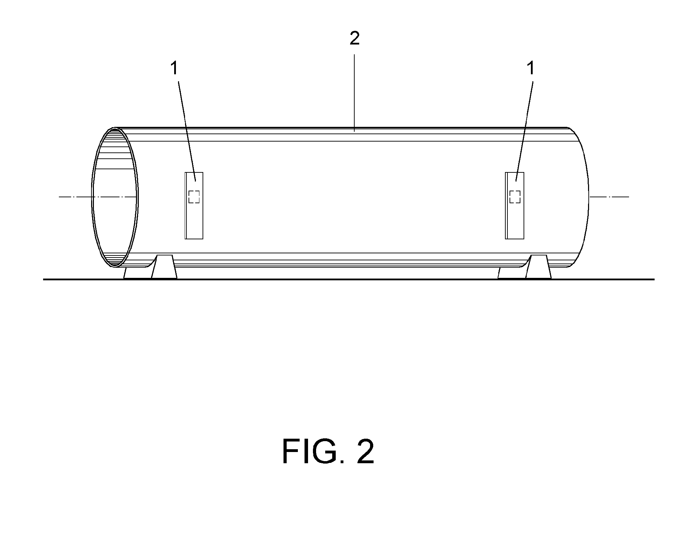

As shown in Figure 2, the protectors are attached to the extreme zones on the side of a tubular section (2) which has already been stowed, beside which the following tubular section will be stowed (2), in such a way that the distance between the two tubular sections can be minimum and at the same time all possible damages as strokes between the tubular sections can be avoided.

The positioning of the protectors is very simple as they are fitted with a magnet (3), easily adhering onto the tubular sections (2). The power of the magnets (3) makes protectors to remain attached to the tubular sections (2) even in weather conditions with heavy wind. In this way, once the protectors are placed on the stowed tubular section (2) the worker is free to leave and begin to stow the following tubular section (2), so that there is no need for any worker to remain in the stowage area, avoiding the above described labor risks and the worker being reallocated to other tasks.

The body (1) is made of an elastic material, e.g. high density foamed plastic, which allows high shock absorption produced during the stowage of the next adjacent tubular sections (2).

This type of material makes it relatively easy to be able to extract the protectors and leave free the space between two tubular sections, even in cases when two tubular sections (2) remain at a distance smaller than the thickness of the body (1), being the protector compressed.

The protectors on a tubular section (2) are removed once the following tubular section (2) has been stowed upon it, the process being repeated for the next tubular section (2) to be stowed.

The present invention should not be limited to the described embodiment. Other configurations can be performed by experts in the field, with the present description as a starting point. As a result, the scope of the invention is defined by the following claims.

## Claims

1. A protector for tubular sections (2) during stowage, wherein the tubular sections (2) are made of paramagnetic-material, **characterized in** by comprising a body (1) fitted with a magnet (3), in order to attach the protectors onto the stowed tubular sections (2) by magnetic adhesion, preventing a new stowed tubular section (2) during stowage from striking the already stowed tubular section (29).

2. A protector for tubular sections (2) during stowage according to claim 1, **characterized in that** the body (1) is made of an elastic material.

3. A protector of tubular sections (2) during stowage according to claim 2, **characterized in that** the elastic material is a high-density foamed plastic.

4. A protector for tubular sections (2) during stowage according to claim 1, **characterized in that** the magnet (3) is located within the body (1), avoiding the tubular section (2) to contact the magnet (3) when locating the protector onto the tubular section (2).
